# EUROPÄISCHE PATENTANMELDUNG

(11) **EP 1 052 148 A2**
(43) Veröffentlichungstag der Anmeldung: **15.11.2000**
(21) Anmeldenummer: 00108705.5
(22) Anmeldetag: 22.04.2000
(51) Int. Cl.: B60R 16/02

(54) **Bordnetz bei Kraftfahrzeugen**

(30) Priorität: 08.05.1999 DE 19921451
(71) Anmelder: DaimlerChrysler AG, 70567 Stuttgart (DE)
(72) Erfinder: Blauensteiner, Wolf-Dieter, 73765 Neuhausen (DE); Schmidt, Fritz, Dr., 71332 Waiblingen (DE)

(57) **Zusammenfassung**

Ein Mehrspannungsbordnetz (3,5) zur Versorgung elektrisch betriebener Verbraucher bei Kraftfahrzeugen, wobei jedem jeweils mit unterschiedlichen Spannungen (14,42V) betriebenen Bordnetzkreis jeweils bestimmte Verbraucher zugeordnet sind, ist dadurch gekennzeichnet, daß Überkreuz-Schaltungsmittel (6) vorgesehen sind, die bei Ausfall oder Störung eines Kreises selbsttätig eine Versorgung der an diesen ausgefallenen Bordnetzkreis angeschlossenen Verbraucher aus einem der anderen Bordnetzkreise sicherstellen.

## Beschreibung

Die Erfindung betrifft ein Bordnetz zur Versorgung elektrisch betriebener Verbraucher bei Kraftfahrzeugen nach dem Oberbegriff des Anspruchs 1.

Ein bekanntes Bordnetz dieser Art (DE 196 51 612 A1) umfaßt einen gemeinsamen Spannungsversorgungsanschluß für das gesamte Bordnetz, an welchen vorzugsweise ein Bordnetzsteuergerät angeschlossen ist, welches dann seinerseits die an es angeschlossenen Verbraucher versorgt. Das Bordnetzsteuergerät kann zusätzliche Spannungswandler umfassen, die die ihm zugeführte allgemeine Energieversorgungsspannung in verschiedene Spannungen wandeln, entsprechend den Erfordernissen der jeweils zu versorgenden Verbraucher. Um die Spannungsversorgung der verschiedenen elektronischen bzw. elektrischen Bauelemente sicher und zuverlässig zu gewährleisten, sind mehrere Stromversorungsquellen, die gegebenenfalls auch unterschiedliche Spannungen aufweisen können, vorgesehen, von denen jeweils eine mit dem Spannungsversorgungsanschluß für das Bordnetzsteuergerät verbunden wird.

Hierzu sind Sensoren in Form von Zenerdioden und weiteren zugeordneten Transistoren vorgesehen, die den Ausfall einer Stromversorgungsquelle bei Schließen eines Schalters, üblicherweise Zündschalter, feststellen und den gemeinsamen Spannungsversorgungsanschluß auf eine andere Stromversorgungsquelle umschalten.

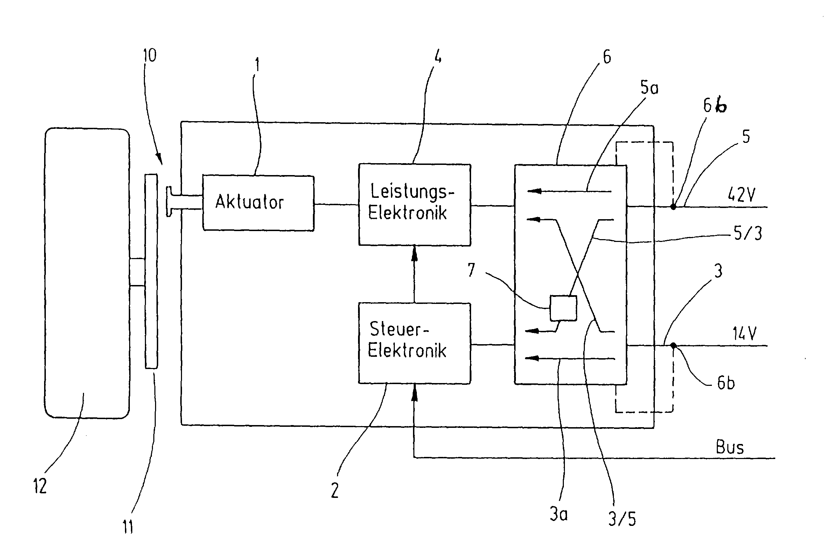

Es ist allgemein bekannt und wird insbesondere im Hinblick auf den ständig steigenden Bedarf an elektrischer Energie bei Kraftfahrzeugen auch angestrebt, elektrische Bordnetze mit zwei oder mehreren Kreisen, die üblicherweise unterschiedliche Versorgungsspannungen aufweisen, auszuführen. Verwiesen wird hierzu insbesondere auf den Aufsatz "Entwicklung künftiger Bordnetz-Architekturen ..." in VDI-Berichte, Nr. 14/15, 1998 (Tagung Baden-Baden, 8./.9. Oktober 1998). So sind insbesondere Überlegungen hinsichtlich eines Zweispannungsbordnetzes weit gediehen, die darauf beruhen (s. Bild 1 des genannten Aufsatzes), daß ein erstes Bordnetz mit höherer Versorgungsspannung, beispielsweise 42 Volt für Hochlastverbraucher, Dauerverbraucher, Heizungen sowie für geregelte Verbraucher (Lüfter, Sitzmotoren) vorgesehen ist, während ein zweites und insofern übliches 14 V-Bordnetz der Versorgung von Verbrauchern geringerer Leistung, insbesondere Ruhestrom- und Niederspannungsverbraucher wie Glühlampen, Steuerelektroniken, Kommunikation u.dgl. dient.

Beide Bordnetzkreise können dabei von einem gemeinsamen Generator mit Strom versorgt werden, der direkt auf die Hochlastverbraucher und den Starterbereich arbeitet und dem eine eigene Batterie, im speziellen Fall eines 42 V-Bordnetzkreises eine 36 V-Batterie zugeordnet ist, während die 14 V-Verbraucher über einen Gleichspannungswandler, nämlich sogenanntem DC/DC-Wandler an den Generator angeschlossen sind und vorzugsweise über eine eigene 12 V-Pufferbatterie verfügen.

Da bei Fahrzeugen zunehmend bisher mechanisch, hydraulisch oder auch pneumatisch betriebene Einrichtungen elektrisch ausgeführt werden, betrifft die Inanspruchnahme elektrischer Energie sowohl die Ansteuerung dieser Einrichtungen wie auch die Erbringung der Arbeitsleistung (Servounterstützung) jeweils allein oder auch beides gleichzeitig.

Wenn es sich bei den jeweils nunmehr elektrisch betriebenen Einrichtungen um sicherheitsrelevante Systeme handelt, wie beispielsweise elektromechanische Bremse, elektromechanische Lenkungen oder allgemein sogenannte X-by-Wire-Systeme, dann ist, allein schon aus rechtlichen Gründen, eine Redundanz bzw. ein Notlaufbetrieb vorzusehen, aufgrund allgemeiner Sicherheitsüberlegungen.

Der Erfindung liegt daher die Aufgabe zugrunde, bei einem Mehrspannungsbordnetz bei Kraftfahrzeugen dafür zu sorgen, daß in einem gegebenenfalls ausfallgefährdeten Bordnetzkreis für die von diesem gespeisten Verbraucher mindestens ein Notlaufbetrieb möglich ist.

Die Erfindung löst diese Aufgabe bei dem eingangs genannten Mehrspannungsbordnetz durch die Merkmale des Anspruchs 1 und hat den Vorteil, daß durch eine im Falle eines Bordnetzkreisausfalls ansprechende Überkreuzschaltung auch den dem ausgefallenen Bordnetz zugeordneten Verbrauchern mindestens so weit elektrische Energie von dem jeweils anderen Bordnetz zuführt, daß ein gegebenenfalls reduzierter Notlaufbetrieb möglich ist.

Dabei ergeben sich für den Fall eines Ausfalls des eine niedrigere Spannung aufweisenden Bordnetzkreises auch deshalb keine weitergehenden Probleme, weil durch eine unkomplizierte Spannungsherabsetzung aus dem eine höhere Spannung aufweisenden Bordnetzkreis die für die Steuerelektronik erforderlichen Versorgungsspannungen weiterhin sichergestellt werden können, beispielsweise durch den Einsatz üblicher DC/DC-Wandler oder Längsregler. Ohnehin befinden sich auf der niederen Spannungsebene überwiegend Verbraucher geringerer Leistung, die für den Zeitraum bis zur Behebung des Schadens aus dem anderen Bordnetzkreis mitversorgt werden können.

Aber auch für den Fall eines Ausfalls des Bordnetzkreises höherer Spannung, in welchem sich Dauerverbraucher, die Leistungselektronik, einen hohen Energiebedarf aufweisende Servosysteme und Stellmotoren befindet, ist die den Notfallbetrieb sichernde, vorzugsweise direkte Aufschaltung des Bordnetzkreises mit niederer Spannung von Vorteil, da ein sofortiger Ausfall der Systeme vermieden wird und lediglich ein langsameres Ansprechen, gegebenenfalls auch mit reduzierter Wirkung, in Kauf zu nehmen ist.

Es versteht sich, daß auf jeden Fall der Ausfall eines entsprechenden elektrischen Versorgungskreises im Kraftfahrzeug durch einen deutlichen Hinweis an die Bedienungsperson, etwa durch eine blinkende Anzeigelampe oder Signalton, angezeigt wird, um möglichst umgehend mit entsprechend reduzierter Geschwindigkeit eine Reparaturmöglichkeit aufzusuchen.

Gegebenenfalls können für diesen Fall auch Drehzahlbegrenzer, die einen Betrieb des Kraftfahrzeugs nur noch in begrenztem Umfang zulassen, zum Einsatz kommen.

Der Grundgedanke der Erfindung besteht darin, durch eine bei Bedarf ansprechende Überkreuzschaltung im Falle eines Mehrspannungsbordnetzes die jeweils intakte Stromversorgung eines Bordnetzkreises auf einen defekten Bordnetzkreis aufzuschalten, so daß sich ein Notlaufbetrieb und eine entsprechend erhöhte Betriebssicherheit ergibt.

Die einzige Figur der Zeichnung zeigt schematisiert als Blockschaltbild ein mögliches Ausführungsbeispiel der Erfindung.

In der Zeichnung ist ein Zweispannungsbordnetz dargestellt mit einem ersten Bordnetzkreis 5 mit einer Versorgungespannung für die an diesen Kreis angeschlossenen Verbraucher von 42 Volt und einem zweiten Bordnetzkreis 3 mit einer Versorgungsspannung von 14 Volt. Es versteht sich, daß diese numerischen Angaben lediglich zum besseren Verständnis angegeben werden, die Erfindung aber nicht einschränken, die auch die Möglichkeit weiterer Bordnetzkreise mit unterschiedlichen Spannungen umfaßt.

Das dargestellte Ausführungsbeispiel betrifft eine elektromechanische Scheibenbremse 10, deren Bremsscheibe 11 an der Achse des zugeordneten Fahrzeugrades 12 befestigt ist. Ein als Aktuator ausgebildeter Stellmotor 1 wirkt auf Bremsbacken und betätigt so die elektromechanische Scheibenbremse. Angesteuert wird der Stellmotor von einer vorgeschalteten Leistungselektronik 4, die ihre Stromversorgung aus dem mit der hohen Spannung von 42 Volt ausgestatteten Bordnetzkreis 5 bezieht.

Die Steuerbefehle für die Leistungselektronik werden von einer zugeordneten Steuerelektronik 2 erzeugt, die entsprechende Befehlssignale über eine BUS-Leitung bezieht und zur Stromversorgung an den 14 V-Bordnetzkreis 3 angeschlossen ist.

Es versteht sich, daß diese in der Zeichnung angegebene, sich speziell auf eine elektromechanische Scheibenbremse beziehende Darstellung auch alle sonstigen, also beliebigen Verbraucher eines Zwei- oder Mehrspannungsbordnetzes bei Kraftfahrzeugen betrifft und stellvertretend für diese steht.

Entsprechend einem Merkmal vorliegender Erfindung ist zwischen die Bordnetzkreise 3 und 5 sowie den zugeordneten Verbrauchern, hier Leistungselektronik 4 und Steuerelektronik 2 eine Überkreuz-Schaltungsanordnung 6 geschaltet, die verschiedene Schaltungsverbindungen zwischen den Bordnetzkreisen ermöglicht und im Grundsatz so arbeitet, daß für den Normalfall die Leitungsverbindungswege zwischen den jeweiligen Bordnetzkreisen und den an diesen direkt angeschlossenen Verbrauchern durchgeschaltet sind, d.h. es besteht eine direkte galvanische Leitungsverbindung 5a zwischen dem 42 V-Bordnetzkreis zur zugeordneten Leistungselektronik 4 und natürlich sämtlichen anderen, an dieses Bordnetzkreis angeschlossenen (Leistungs)-Verbrauchern sowie eine direkte galvanische Leitungsverbindung 3a zwischen dem 14 V-Bordnetz und dem zugeordneten sich auf eine Steuerelektronik beziehenden Verbraucher 2 und natürlich sämtlichen anderen, an diesem Bordnetz angeschlossenen Verbrauchern. Dabei versteht es sich, daß diese Überkreuz-Schaltungsanordnung 6 bei einem Mehrspannungsbordnetz entweder nur einmal vorhanden ist, bei entsprechender Leistungsauslegung ihrer Umschaltsysteme oder, falls gewünscht bzw. wo sinnvoll, auch mehrfach vorhanden sein kann, um beispielsweise unmittelbar angrenzend in räumlicher Nähe zu den entsprechenden Verbrauchern angeordnet werden zu können.

Die Überkreuz-Schaltungsanordnung 6 verfügt über entsprechende Sensoren 6a, 6b, die den Ausfall oder den Defekt eines oder mehrerer Bordnetzkreise erfassen und selbsttätig entsprechende Überkreuzschaltungen auf den jeweils noch aktiven Bordnetzkreis veranlassen, so daß sich die Möglichkeit eines Notlaufbetriebs für die Stromversorgung ausgefallener Bordnetzkreise ergibt.

Im speziellen Fall der Aufschaltung der überwiegend unverträglichen 42 V-Stromversorgung auf den Niederspannungs-Steuerelektronikkreis von 14 Volt ist eine Spannungsreduzierungsanordnung 7 in die Überkreuzverbindung 5/3 vom 42 V-Bordnetzkreis auf den 14 V-Bordnetzkreis vorgesehen, die dafür sorgt, daß für die Verbraucher des Niedrigspannungs-Bordnetzkreises von 14 Volt, möglichst ohne Leistungsverlust, entsprechend reduzierte Spannungswerte aus dem 42 V-Bordnetz zur Verfügung gestellt werden. Hierfür können DC/DC-Wandler eingesetzt werden oder Längsregler in geeigneter Auslegung.

Die andere Überkreuzverbindung vom 14 V-Bordnetzkreis auf das 42 V-Bordnetzkreis ist mit 3/5 bezeichnet und versorgt die Verbraucher des 42 V-Kreises direkt mit der 14 V-Spannung des Bordnetzkreises 3. Dies ist hinreichend, um eine Notlaufversorgung der angeschlossenen Systeme zu gewährleisten.

Für die Umschaltvorgänge in der Überkreuzschaltungsanordnung 6, also das Umschalten von der Leitungsverbindung 5a auf die Leitungsverbindung 3/5 bzw. von 3a auf die Leitungsverbindung 5/3 mit zwischengeschalteter Spannungsreduzierungsanordnung 7 können beliebige Schaltungsanordnungen Verwendung finden, beispielsweise rein elektronische Schalter in Form von entsprechend in ihrer Leistung ausgelegten MOS-FET'S, sonstige Leistungshalbleiter oder auch Relaisschaltungen, die in diesem Falle bei der zu erwartenden sehr geringen Häufigkeit einer Inanspruchnahme durchaus einsetzbar sind.

Beispielsweise kann durch die Verwendung von Ruhestromrelais, die im Normalfall die Leitungsverbindungen 5a bzw. 3a aufrecht erhalten, auf die Sensoren 6a, 6b verzichtet werden, da bei Ausfall der Stromversorgung diese Relais so ausgelegt werden können, daß sie dann automatisch auf die jeweilige Überkreuzverbindung umschalten. Es versteht sich, daß die Stromversorgung für die Überkreuz-Schaltungsanordnung 6 auf jeden Fall auf beiden bzw. auf allen vorhandenen Bordnetzkreisen beruht, damit deren Funktionsfähigkeit jedenfalls so lange gesichert ist, wie noch eines der Bordnetze funktionsfähig ist, auf welches ausgefallene Bordnetze umgeschaltet werden können.

Es ist eingangs schon erwähnt worden, daß für die Möglichkeit des Ausfalls des höherspannigen Bordnetzkreises für die an diesen Kreis angeschlossenen (Leistungs)Verbraucher üblicherweise eine Einbuße in Ansprechgeschwindigkeit und/oder Wirkung in Kauf genommen werden muß. Bei der Auslegung derzeitiger Stellmotor- und sonstiger "Drive-By-Wire-Systeme" zeigen diese aber durchaus noch ein funktionsfähiges Ansprech- und Wirkungsverhalten und weisen auch bei vergleichsweise niedrigerer Versorgungsspannung noch eine hinreichende Leistungsaufnahme auf. Alternativ ist es möglich und liegt innerhalb des erfindungsgemäßen Rahmens, in die Überkreuz-Leitungsverbindung 3/5 Schaltungsmittel zur Spannungserhöhung noch vorzusehen, was insbesondere auch dann sinnvoll ist, wenn besonders sicherheitsrelevante Hochleistungsverbraucher wie elektromechanische Bremsen oder eine elektromechanische Lenkung, deren Stromverbrauch innerhalb vorgegebener Grenzen verbleibt und absehbar ist, mit eigenen Überkreuz-Schaltungsanordnungen versehen sind. Im Gegensatz hierzu können weniger sicherheitsrelevante Verbraucher wie Heizungen, Lüftermotoren u.dgl., die ebenfalls am 42 V-Bordnetz liegen, dann über eine gemeinsame Überkreuz-Schaltungsanordnung bis zur Beseitigung der Störung problemlos mit der niedrigeren Spannung versorgt werden.

## Patentansprüche

1. Bordnetz zur Versorgung elektrisch betriebener Verbraucher bei Kraftfahrzeugen, wobei mehrere, auch unterschiedliche Spannungen aufweisende Stromversorgungsquellen sowie Sensormittel zur Erfassung eines Ausfalls einer Stromversorgungsquelle vorgesehen sind, die Schaltmittel zur Anschaltung einer intakten Stromversorgungsquelle betätigen, dadurch gekennzeichnet, dass das Bordnetz als Mehrspannungsbordnetz mehrere, mit unterschiedlichen Spannungen betriebene und jeweils entsprechend ausgebildete Verbraucher aufweisende Bordnetzkreise (3, 5) enthält, wobei jeder Bordnetzkreis (3,5) ständig mit seiner zugeordneten Stromversorungsquelle verbunden ist und Überkreuz-Schaltungsmittel vorgesehen sind, die bei Ausfall oder Störung eines Bordnetzkreises (3, 5) selbsttätig eine Versorgung der an diesem ausgefallenen Bordnetzkreis (3, 5) angeschlossenen Verbraucher aus einem der anderen Bordnetzkreise dadurch sicherstellt, dass von einem intakten Bordnetzkreis (3, 5) eine zusätzliche Stromverbindung zum ausgefallenen Bordnetzkreis (3, 5) geschaltet wird.

2. Bordnetz nach Anspruch 1, dadurch gekennzeichnet, dass die Überkreuz-Schaltungsmittel Teil einer Überkreuz-Schaltungsanordnung (6) sind, die zwischen die jeweiligen Bordnetzkreise (3, 5) und die diesen Kreisen zugeordneten Verbraucher geschaltet ist und Leitungsumschalter (Relais, Halbleiterschalter) für die Überkreuzverbindung der Bordnetzkreise mit den Verbrauchern des jeweils gestörten Bordnetzes aufweist.

3. Bordnetz nach Anspruch 1 oder 2, dadurch gekennzeichnet, dass für die Verbindung von im Normalfall mit dem eine niedrigere Spannung aufweisenden Bordnetzkreis (3) verbundenen Verbrauchern mit dem eine höhere Spannung aufweisenden Bordnetzkreis (5) eine Spannungsreduzieranordnung (7) (DC/DC-Wandler, Längsregler) in der Überkreuz-Verbindungsleitung (5/3) angeordnet ist.

4. Bordnetz nach einem der Ansprüche 1 - 3, dadurch gekennzeichnet, dass sicherheitsrelevanten elektrischen Verbrauchern (elektromechanische Scheibenbremse, elektromechanische Lenkung, X-by-Wire-Systeme) eigene Überkreuz-Schaltungsanordnungen lokal zugeordnet sind, die auch eine Aufwärtswandlungsanordnung für Versorgungsspannungen aufweisen.
